# EUROPEAN PATENT SPECIFICATION

(11) **EP 0 749 085 B1**
(45) Date of publication and mention of the grant of the patent: **24.03.2004**
(21) Application number: 96109487.7
(22) Date of filing: 13.06.1996
(51) Int. Cl.: G06K 7/10

(54) **Ergonometric hand-held data collection terminal**
Ergonomisches Handterminal zur Datensammlung
Terminal ergonomique portatif de saisie de données

(30) Priority: 13.06.1995 US 489729
(43) Date of publication of application: 18.12.1996
(73) Proprietor: SYMBOL TECHNOLOGIES, INC., Holtsville, New York 11742-1300 (US)
(72) Inventor: Doran, Robert, East Setauket, New York 11733 (US); Jwo, Chin-Hung, Mount Sinai, New York 11766 (US); Peltz, Martin, Lynchburg, Virginia 24502 (US); Swift, Philip W., Port Jefferson, New York 11777 (US)
(74) Representative: Wagner, Karl H., Dipl.-Ing.

(56) References cited:
- EP-A- 0 653 722
- WO-A-94/02910
- WO-A-95/22118
- US-A- 5 241 488
- US-A- 5 496 992

## Description

### BACKGROUND OF THE INVENTION

### FIELD OF THE INVENTION

The present invention relates to portable electronic devices in general, and more particularly to hand-held data collection terminals having bar-code readers.

### DESCRIPTION OF THE RELATED ART

There are already known various constructions of hand-held electronic devices, among them such that are known as hand-held data collection terminals that include bar-code readers or scanners. Such terminals are becoming more and more popular, for instance in retail establishments, with increasing awareness of the inherent advantages of such devices in keeping running inventory of available items, their locations, prices etc., and in ordering items whose supplies are running low before they are sold out, and all that in an easy, foolproof and reliable manner.

There are already known scanners of various constructions. Examples of such devices can be found in U.S. Patent No. 4,760,248 to Swartz, et al. and in the patents cited therein, namely U.S. Patents Nos. 4,251,798; 4,360,798; 4,369,361; 4,387,297; 4,409,470; and 4,460,120.

The very existence of such hand-held terminals is a testament to the success in power consumption reduction in the areas not only of electronic or information processing circuits, but also of lasers, display arrangements and other mechanical and electrical components of electronic devices, as well as to progressing miniaturization and attendant weight reduction in the above areas and in that of electric power supplies. This progress notwithstanding, the known terminals still had considerable bulk. It was recognized later that it is the data display and/or entry arrangement provided on the terminal housing that is becoming the primary determinant of the terminal size; not because it was impossible to make such arrangement any smaller -- the technology was there, namely, digital watches. calculators, etc. -- but because it would be impractical to do so since it would be difficult for the user to read the display and/or make the required entries for hours on end unless the characters displayed and/or the buttons or other depressible components or the like were of a certain minimum size.

Considering this, it was proposed in U.S. Patent No. 5,241,488 to Chadima, et al. to provide the housing of a terminal with a reduced cross section in its middle region, the purported purpose of this expedient being to make it easier and more convenient for the user to hold the terminal while in use. Experience has shown, however, that the device of this type is still very cumbersome to use, especially because the location and configuration of the reduced cross section region are such that the hand in which the user holds the terminal has to assume an unnatural and hence tiresome position when using the terminal, be it to aim the scanner in the proper direction, trigger its operation, or to read the display or make the requisite entries by manipulating buttons, handwriting on pressure sensitive areas of the above arrangement, or the like.

EP 0 653 722 A2 reflecting the preamble of claim 1 discloses a hand-held data entry terminal that is convenient to use by both left and right-handed operators. The hand-held data entry terminal includes a swivel mount connecting the scanning head to the housing, such as to permit the scanning head to be rotated between first and second reading positions. The swivel mount includes a bushing affixed to the housing and including a pair of diametrically opposed detent slots interconnected by a semicircular track, a spring acting between the bushing and the scanning head to bias the scanning head into juxtaposition with the housing, and a tab carried by the scanning head for engagement in one or the other of the detent slots when the scanning head is in either of the first and second reading positions, with the tab moving through the semicircular track when the scanning head is being swivelled between the first and second reading positions. To rotate the scanning head from one reading position to the other, an operator grasps the scanning head and pulls it away from the housing against the force of the spring. This action draws the tab out of one of the detent slots. The operator then twists the scanning head to position it to the other reading position, where the tab drops into the other end detent slot under the bias of the spring. During rotation of the scanning had, the tab runs in a track to maintain the detent-released condition of the scanning head.

### Objects of the Invention

Accordingly, it is a general object of the present invention to avoid the disadvantages of the prior art.

More particularly, the present invention provides greater flexibility with regard to orientation of the casing and also facilitates movement of the casing, thus improving the operability of the electronic device.

More particularly, it is an object of the present invention to provide a hand-held electrical device, especially a data collection terminal, which does not possess the drawbacks of the known devices of this type.

Still another object of the present invention is to devise an electronic device of the type here under consideration that is suited to be held in a user's hand in a completely natural position no matter what operation is being performed with such device.

It is yet another object of the present invention to design the above device in such a manner as to minimize, if not eliminate, the danger that it could slip out of the user's hand on relaxation of the grip thereon.

A concomitant object of the present invention is so to construct the hand-held device of the above type, particularly a terminal having a bar-code scanner, as to be relatively simple in construction, inexpensive to manufacture, easy to use, and yet reliable in operation.

### SUMMARY OF THE INVENTION

In keeping with the above objects and others which will become apparent hereafter, the present invention comprises a hand-held electronic device as set forth in claim 1. In a preferred embodiment, the device includes a housing having a front side facing a user when the device is in use, and an oppositely facing back side; information processing means in the housing; means accessibly located at the front side of the housing for exchanging information with the information processing means; and means on the back side for forming a handgrip configured to be substantially conformingly received in the palm of the hand of the user. A particular advantage of the electronic device construction as described so far is that the device can be used for extended periods of time without tiring or otherwise inconveniencing the user.

It is especially advantageous when the forming means gives the handgrip a generally barrel-shaped configuration at a central region of the back side for stability. The forming means advantageously includes at least one diverging surface that diverges in a direction toward a bottom portion of the housing that is closer to the user when the device is in use than a top portion of the housing. The hand-held electronic device advantageously further includes detection means at least partially accommodated in the housing and operative for gathering information for use by the information processing means when activated. Then, according to an advantageous aspect of the present invention, there is further provided means for activating the detection means, such activating means including at least one trigger button situated on the diverging surface of the forming means and enclosing an acute angle of a predetermined magnitude with at least one central plane of the electronic device.

These expedients have at least two advantages: for one, the divergence of the surface in question minimizes the danger of the device slipping out of the hand of the user when he or she ever so slightly relaxes the grip exerted on the handgrip. On the other hand, the location of the trigger button on such diverging surface puts it in a position in which it can be easily accessed and depressed by the user's forefinger and, as a matter of fact, at a region to which the forefinger tends to gravitate naturally, and in which the depression of the trigger button actually further improves the hold the user has on the handgrip.

It has been found to be particularly advantageous for the predetermined magnitude of the aforementioned acute angle to be substantially 45° when the one central plane is that which separates the front side from the back side of the housing, and substantially 30° when the one central plane is a symmetry plane of the housing extending substantially normal to the front and back sides from the top portion to the bottom portion of the housing. Advantageously, the diverging surface includes two opposite side zones arranged mirror-symmetrically with respect to a symmetry plane of the housing, and the aforementioned trigger button is situated at one of the side zones. Then, there may be further provided an additional trigger button similar to the one trigger button and situated at the other of the side zones substantially mirror-symmetrically with respect to the one trigger button.

According to another advantageous facet of the present invention, the hand-held electronic device further comprises a strap extending along and at a distance from the handgrip and operative for confining the hand of the user between itself and the handgrip when the electronic device is being held by the user. It is especially advantageous when the strap has one end portion articulated to a fixed location of the bottom portion of the housing, and another end portion that is mounted on the back portion of the housing at a distance from the bottom portion that exceeds the expected width of the hand of any potential user, for movement between two end positions in each of which the strap extends across the back of whichever hand the user happens to use to hold the electronic device by the handgrip, in spaced relationship with respect to all knuckles and joints of that hand. The strap extends in each of its end positions along a course that diverges by a predetermined acute angle from the symmetry plane from the one to the other end portion of the strap.

In further accord with the present invention, the hand-held electronic device further includes a casing of a substantially dome-shaped configuration that is mounted for movement between a plurality of positions on and relative to a top portion of a housing that is more remote from the user when the device is in use than a bottom portion of the housing. The dome-shaped configuration of the casing gives the electronic device particularly shock-proof properties because its contour blends smoothly with that of the housing and there are no comers or other weakened portions that could be damaged or at which the casing could be easily separated from the housing on inadvertent contact with some external structure.

The hand-held electronic device has a particularly advantageous construction when it incorporates optical scanning means including a laser diode for emitting a light beam. an optical train at least a part of which is accommodated in the casing for modifying the light beam, a photodiode for sensing light reflected off a bar-code symbol over a field of view, and a scanning component for scanning the light beam and/or the field of view. In that case, the dome-shaped casing includes a window for the passage of the light beam and/or the reflected light therethrough. Then, when the electronic device is equipped with telecommunication means including an antenna for communicating at radio frequency with a remote location, the antenna is mounted on the casing rearwardly of the window for joint movement with the casing so as to always be outside the field of view of the scanning means and thus not to interfere with the operation of the latter.

Another feature of the present invention resides in the provision of means for enhancing traction between at least selected portions of the hand of the user and corresponding portions of the handgrip. Such enhancing means advantageously includes dimples in the affected portions of the handgrip. Advantageously, the enhancing means is situated at that zone of at least one of two side surfaces of the handgrip with which the tip of the thumb of the user is juxtaposed when the device is being used.

An additional feature of this invention is embodied in an arrangement for mounting a plate-shaped element having a front and a rear surface in a support structure opening that is bounded by an inner peripheral surface. The arrangement includes means for supporting the plate-shaped element in the opening, including a substantially rigid internal frame firmly engaging the inner peripheral surface and spacedly surrounding the plate-shaped element to form an intervening gap; and an overmold of a resiliently yieldable material including an embracing portion that extends around said internal frame and penetrates into said gap to fill the same and form a shock-absorbing barrier therein.

The supporting means further includes a substantially rigid backing plate firmly engaging the inner peripheral surface adjacent said. internal frame and juxtaposed with the rear surface of the plate-shaped element to support the latter from behind.

A substantially rigid external frame surrounds the internal frame with a predetermined spacing therefrom. The overmold further includes an extension portion integral with said embracing portion and extending therefrom around said external frame.

Another novel feature of the present invention is embodied in a multi-connector assembly for sealing the device from moisture and contaminant infiltration. The assembly includes a computer connector for exchanging information between an external host computer and the device, a keyboard connector for exchanging information between an external keyboard and the device, and a power connector for supplying DC power to the device. Each connector has a shield integral with the plate for superior sealing. An elastomeric gasket is molded with the plate and insures a water-and contaminant-resistant seal.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

### BRIEF DESCRIPTION OF THE DRAWING

FIG. 1 is a partially disassembled front elevational view of a bar code scanning device of the present invention;
FIG. 2 is a side elevational view of the scanning device of FIG. 1;
FIG. 3 is a top plan view of the device of FIGS. 1 and 2;
FIG. 4 is a rear elevational view of the device depicted in FIGS. 1 to 3;
FIG. 5 is a partial cross-sectional view on a scale enlarged relative to those of FIGS. 1 to 4 of the scanning device of the present invention, taken on line 5 - 5 of FIG. 4;
FIG. 6 is a rear elevational view on a still more enlarged scale of a fragment of the scanning device, taken in the directions of the arrows 6 - 6 of FIG. 2;
FIG. 7 is a bottom plan view of the scanning device of FIGS. 1 to 6;
FIG. 8 is a simplified sectional view through a scanning device of the type illustrated in FIGS. 1 to 7, showing a flexible connector extending between the interior of a housing and that of a part-spherical casing, in one position of the casing relative to the housing;
FIG. 9 is a view identical to that of FIG. 8 except for showing the casing, and hence the flexible connector, in a different position with respect to the housing;
FIG. 10 is a front elevational view of the flexible connector used in FIGS. 8 and 9, by itself and in its outstretched condition;
FIG. 11 is an exploded view showing a framed display arrangement of the type usable in the scanning device of the present invention;
FIG. 12 is a sectional view of a region of the framed display arrangement of FIG. 11;
FIG. 13 is a partial sectional view on an enlarged scale taken on line 13-13 of FIG. 7;
FIG. 14 is an elevational view on an enlarged scale of a multi-connector plate depicted in FIG. 13;
FIG. 15 is a partial exploded perspective view of an upper portion of the housing of the device of FIG. 1, together with a lower portion of the casing disassembled from the device;
FIG. 16 is a partial rear elevational view of the casing of FIG. 15 mounted on the device;
FIG. 17 is a partial sectional view taken on line 17-17 of FIG. 16; and
FIG. 18 is a top plan view taken on line 18-18 of FIG. 17.

### DETAILED DESCRIPTION OF THE PREFERRED EMBODIMENT

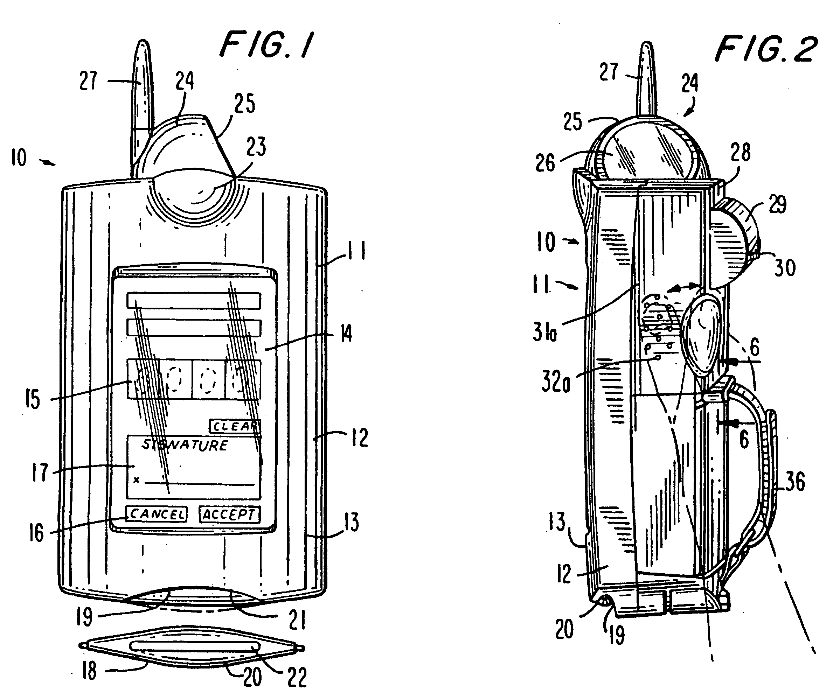

Referring now to the drawing in detail, and first to FIG. 1 thereof, it may be seen that the reference numeral 10 has been used therein to identify a hand-held electronic device of the present invention in its entirety. As illustrated, the device 10 includes as one of its main components a housing 11. The housing 11 accommodates electronic circuitry of any well-known construction that does not per se constitute a part of the present invention and hence will not be discussed here in any great detail; rather, it will be referred to only marginally to the extent that it relates to the various structural and other features of the present invention that will be addressed here, and then just with respect to the functions its various parts perform and not to how they are constructed to perform such functions.

The housing 11 has a main portion 12 of a generally parallelepiped configuration that is shown to carry a data entry and/or display device 14 on its front portion 13. At this juncture, it is to be mentioned that all references used herein with respect to directions or relative positions are intended to be and should be interpreted as being related to the orientation in which the electronic device 10 is ordinarily being used, i.e. with the "bottom" being closer to the user or the ground, the "front" facing the user, etc.

As illustrated in FIG. 1 of the drawing, the device 14 is constructed as a combined data entry and display device that is shown to include at least on one of its regions a display arrangement 15, for instance of a liquid crystal or similar type, at least on another of its regions a depressible switch-type arrangement 16, and at least on yet another of its regions a recording arrangement 17 that is capable of receiving information in handwritten form. All of these arrangements 15, 16 and 17 are of well-known constructions so that, the manner in which they are integrated into the device 14, and the way they operate and cooperate with electronic circuitry accommodated in the interior of the housing 11 need not and will not be discussed here in any detail.

Suffice it to say that the display arrangement 15 is operative for displaying any data or other information that is supplied to it in the form of appropriate control signals by a display driver circuitry, the switch arrangement 16 is operative for generating various command signals that are supplied to a control circuitry, and the recording arrangement 17 is operative for sensing pressure applied to various points or zones thereof and of issuing electrical signals representative of this information, such electrical signals being supplied to evaluation circuitry that interprets, stores and/or forwards such information, depending on the ultimate use and/or destination of such information.

The diverse driver, control. evaluation and other circuits accommodated in the interior of the housing 11, while performing their assigned tasks individually, are not totally independent of one another, though. Rather, they are parts of a larger whole, that is, they cooperate with one another toward a shared purpose. Thus, information gathered by sensors associated with one circuit may be displayed under the control of another, either one or both of such circuits may be controlled by a third one in response to command signals applied thereto, and a fourth circuit may process, store and/or transmit signals derived from or resulting from the activities of any or all of the above-mentioned circuits. As mentioned before, all this is well known and needs no further explanation.

To be able to enter the handwritten information on the pressure sensitive arrangement 17, it is necessary for the user of the electronic device 10 to have ready access to a writing implement 18 of the type suitable for this purpose, without having to fumble through pockets or to try to retrace his or her steps to the fast location at which such implement 18 had been used. To this end, a bottom portion of the housing 11 is provided with a recess 19 for receiving the writing implement 18 when not in use, as indicated in dashed lines in FIG. 1. The writing implement 18, which may be constructed as a passive element or stylus, is retained in the recess 19 by any known means, such as by elastically yieldable projections situated in the recess and engaging respective counterpart surfaces or depressions of the implement 18.

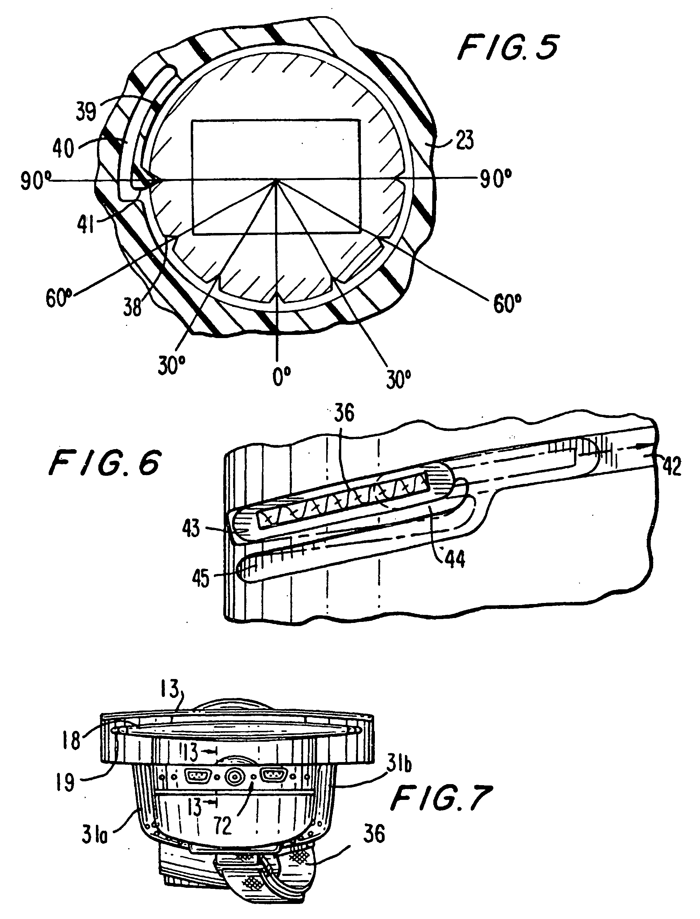

As a comparison of FIGS. 1 and 7 will reveal, the writing implement 18 is essentially flat, that is it includes two oppositely facing substantially planar major surfaces, one of which is indicated in FIG. 1 at 20. To facilitate the withdrawal of the implement 18 from the recess 19, not only is the bottom portion of the housing 11 contoured at the region of the recess 19 in the manner indicated at 21 in FIG. 1 so as to expose a considerable portion of the respective flat surface 20 when the writing implement 18 is received in the recess 19, but the implement 18 is also provided with a channel 22 in which the user can insert his or her fingernail to securely engage the implement 18 prior to and during its withdrawal from the recess 19.

The electronic device 10 shown in the drawings is also provided with mechanical, electrical, electromechanical and other arrangements or circuits enabling it to be used as a so-called bar-code reader or, as it will be referred to herein, a scanner of the type exemplified by the following U.S. Patent Nos. 4,387,297; 4,409,470; 4,806,742; 5,157,248; 5,254,844; 5,306,900 and D-305,884.

Here again, such arrangements or circuits are well known and, therefore, will not be discussed here in any detail except to say that they, like the arrangements and circuits mentioned before, may be of the same or similar basic constructions as those currently used, for instance, in the PPT4100 portable pen terminal with integrated scanner commercially available from Symbol Technologies, Inc., the assignee of the instant application.

As is well known, scanners of this type issue, when triggered, a relatively narrow low-energy light beam, preferably a laser beam, onto the area to be scanned, this beam being automatically moved to scan the target or area of interest and to be reflected to a greater or lesser degree from different zones of the area that correspond to the light-absorbing bars and reflective intervening spaces of the bar code, such as the well known Uniform Product Code (UPC) symbol provided on the product itself or on a label attached to a shelf or other support on which a multitude of products of the same kind is supported. The information carried by that part of the thus reflected light that is returned to the scanner is then detected over a field of view by photosensitive sensing means located in the scanner and then processed and evaluated to determine therefrom the identity of the product described by such UPC code.

In the implementation of the electronic device 10 of the present invention that is shown in the drawings, the upper portion of the housing 11 has an enlargement 23 at its central region. The enlargement 23 serves for accommodating a lower portion of a dome-shaped casing 24 that is movable within a limited range relative to the housing 11. The casing 24 is shown to have a substantially spherical overall configuration and to include a flat portion 25 that, as shown particularly in FIG. 2 of the drawing, incorporates a window 26. The casing 24 accommodates at least some of the components of the optical train forming a forward path for the scanning laser beam commencing at the laser beam source, and a return path for the reflected laser radiation terminating at the photosensitive detector means.

As is well known, the window 26 is light transmissive, and preferably is a highly wavelength selective filter, i.e. it lets radiation at the wavelength issued by the laser beam source pass therethrough substantially without attenuation whether propagating in the forward or in the return path, but substantially prevents light at all other wavelengths, such as those contained in the ambient light encountered at the location of use of the electronic device 10, from entering the interior of the casing 24 and/or of the housing 11 where it could otherwise adversely affect the operation of the photosensitive detector means.

When FIGS. 1 and 2 of the drawing are considered side by side, it may be observed not only that the electronic device 10 is also equipped with an external antenna 27 by means of which a radio frequency transmitting/receiving circuitry, which is also accommodated in the interior of the portable electronic device 10, is able to exchange data or other information with a stationary base station/main computer/host processor combination when necessary or desired, but also that the antenna 27 is mounted on the dome-shaped casing 24 rearwardly of the window 26 for joint movement with the casing 24. As a result, regardless of the position the casing 24 assumes within its range of movement relative to the housing 11, the antenna 27 is always situated so that it is not "visible" from the interior of the casing 24 through the window 26 and hence does not impede or obstruct in any way the propagation of either the forward or the return beam or radiation. Rather than an external antenna, the electronic device 10 could be equipped with an internal antenna accommodated within the casing 24 or the housing 11.

As may also be observed in FIG. 2 of the drawing, the main portion 12 of the housing 11 of the electronic device 10 is provided on its back side 28 with a bulging-out projection 29. Advantageously, the projection 29 is constituted by at least a projecting portion of a so-called battery pack. As is well known, a battery pack is basically a cartridge that contains replaceable or rechargeable batteries and that is removably mounted on the main portion 12 of the housing I 1 in any known manner and includes electric contacts that engage their counterparts provided on or in the main portion 12 of the housing 11 in the mounted state of the cartridge to supply electric power to such counterpart contacts via the same to any and all of the electrical and electronic circuits of the electronic device 10. The bulging projection 29 of the present invention is provided with a rib-shaped formation 30, the purpose and function of which will be discussed later.

As a comparison or FIGS. 2 to 4 of the drawing will reveal, the back side 28 of the main portion 12 of the housing 11 is flanked by two side surfaces 31a and 31b that are provided with friction or traction enhancing means 32a and 32b, respectively. It may be seen by observing the user's hand and/or fingers that are shown in the drawing in dash-dotted lines that the friction enhancing means 32a or 32b is located at a region of the respective side surface at which a thumb of a right-handed or of a left-handed user of the device 10 comes to rest when the device 10 is being held by the user, and serves to enhance the security of engagement of the respective surface 31a or 31b by the respective user's thumb. Advantageously, the friction enhancing means 32a and 32b is constituted by a plurality of dimples that increase the desirable friction and yet do not inconvenience or hurt the user.

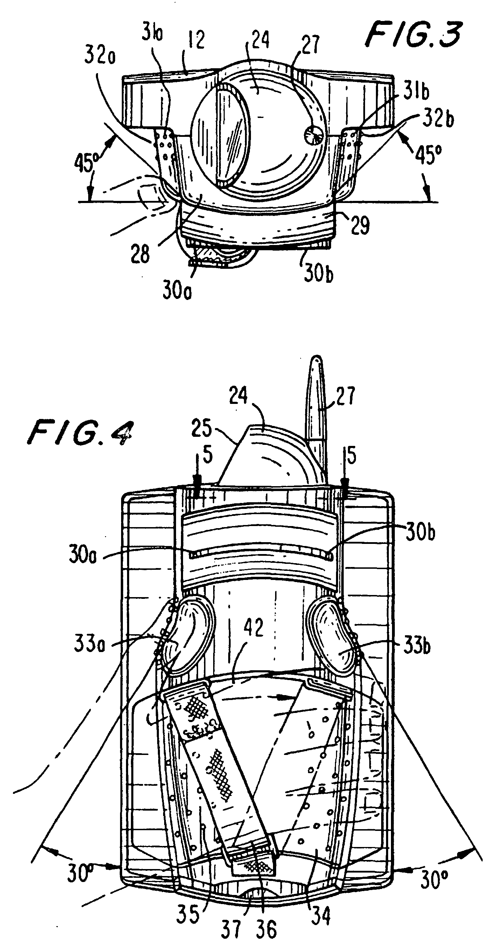

Two concave or dish-shaped trigger buttons 33a and 33b are situated on the back portion 28 of the housing 11 next to the friction-enhancing means 32a and 32b, respectively. Each of the trigger buttons 33a and 33b is inclined at an angle of substantially 45° relative to a plane along which the front and back portions 13 and 28 of the main portion 12 of the housing 11 extend as indicated in FIG. 3, and at an angle of substantially 30° with respect to a symmetry plane of the main portion 12 that is disposed midway between the side surfaces 31a and 31b, as indicated in FIG. 4 of the drawing.

Because of its location and its aforementioned inclinations, the respective trigger button 33a or 33b is ideally adapted for actuation by the forefinger of the right-handed or left-handed user, as indicated in FIG. 4 of the drawing in broken lines for a left-handed user who will hold the device 10 in his or her right hand so as to have the left hand free for writing on the recording device 17, for instance. However, the user could use his or her thumb for depressing the respective other trigger button 33b or 33a instead, by shifting the thumb from the friction-enhancing means onto the trigger button 33b or 33a in question. Yet, it will be appreciated that such shifting would render the hold that the user has of the device 10 less secure and, consequently, the initially mentioned forefinger actuation is and will be the preferred one, being used predominantly if not to a total exclusion of the thumb actuation.

Another advantage of the forefinger actuation is that it actually increases the grip of the device 10 by the user while the respective trigger button 33a or 33b is depressed in that the thumb is pressed against the respective friction-enhancing means 32b or 32a with a force increased by an amount corresponding to the force exerted on the trigger button 33a or 33b by the forefinger.

As may be seen particularly in FIG. 4 of the drawing, the rear portion 28 has a substantially barrel-shaped or hourglass-shaped handgrip region 34 extending all the way from the bottom of the main portion 11 of the housing 12 to upwardly of the trigger buttons 33a and 33b. Because of this configuration, the handgrip region 34 fits perfectly into the palm of the hand of the user, and thus not only gives the user a comfortable feeling while holding the device 10 even for a relatively long period of time, but also, and more importantly, provides assurance that the device 10 will not inadvertently slip out of the hand of the user if the grip is relaxed for some reason.

For one, the widening of the region 34 in the direction in which the device 10 would move out of the hand of the user as a result of such grip relaxation would re-establish such grip even in the absence of any action on the part of the user. Secondly, the perception of such widening of the handgrip portion 34 as the device 10 begins to slip ever so minutely out of the hand of the user immediately alerts the user to the grip relaxation and causes the user to tighten the grip again, usually as a reflex action. Of course, neither one of these phenomena would be encountered if the handgrip portion 34 were of the same cross section throughout, so that the device 10 could slip out of the hand of the user before he or she would be able to take any countermeasures to prevent this from happening.

The handgrip region 34 is shown to be provided with friction-enhancing means 35 of its own. The friction-enhancing means 35 is advantageously of the same type as the previously mentioned friction-enhancing means 32a and 32b, that is, it is constituted by a multitude of strategically distributed dimples. In use, these dimples. are juxtaposed with corresponding zones of the palm and the four fingers other than the thumb of the hand of the user of the device 10.

There is further provided a strap 36 that, as indicated in FIG. 4 of the drawing, is movable between two end positions in each of which it is inclined with respect to the aforementioned symmetry plane. The angle of such inclination advantageously is smaller than, and at most substantially corresponds, to the 30° angle at which the respective trigger button 33a or 33b extends with respect to the same symmetry plane. The strap 36 not only provides additional assurance against the slippage of the electronic device 10 out of the hand of the user, but also almost imperceptibly causes the user to put his or her hand into its desirable inclined holding position relative to the main portion 12 of the housing 11, a position which feels natural and yet would not necessarily be assumed and/or maintained in the absence of such strap 36.

It ought to be noted at this juncture that the end position of the strap 36 that is shown in solid lines in FIG. 4 is being used when holding the device 10 in the right hand, whereas the other, broken line, end position is to be employed when a right-handed user holds the device 10 in his or her left hand. It may be observed that, when the strap 36 is in its proper end position for the hand in which the device 10 is being held, it extends across the back of the user's hand rather than over any knuckles, joints or other elevated areas of the user's hand where it could otherwise evoke the feeling of discomfort, or worse, of pain, especially when the device 10 is used for an extended period of time.

Coming now back to the aforementioned rib-shaped formation 30, it may be seen especially in FIGS. 3 and 4 of the drawing that it consists of two sections 30a and 30b, each being situated at a different side of the aforementioned symmetry plane. Each of such sections 30a and 30b constitutes a foot disposed at a different side of, and at a considerable distance as far as its effective area is concerned from, the symmetry plane. FIG. 4 further shows that the handgrip portion 34 further includes, at its bottom region, a third foot 37. It will be easily recognized that, when the device 10 is put down on a horizontal support surface with the back portion 28 facing such surface, it will rest on the three feet 30a, 30b and 37, rather than on any other zone of the housing 11. Inasmuch as the effective areas of the feet 30a, 30b and 37, that is the areas at which they contact the support surface, are relatively far apart, the device 10 has a very high-degree of stability in this rest position thereof.

FIG. 5 of the drawing illustrates that the casing 24 can be arrested in any of a plurality of its positions relative to the enlargement 23 of the main portion 12 of the housing 11. It is to be understood that in the illustrated implementation of the device 10, the only movement that the casing 24 can conduct relative to the main housing portion 12 is turning about a central axis perpendicular to the drawing in FIG. 5. To provide for the arresting action, the casing 24 is provided on a portion of its outer periphery with a series of circumferentially spaced detaining recesses identified by the reference numeral 38, and the enlarged housing portion 23 includes a latching pawl 39 that is separated from the remainder of the enlarged housing portion 23 by a slot 40. The latching pawl 39 is provided with a nose 41 that is substantially conformingly receivable in a selected one of the detaining recesses 38 when in alignment therewith. To insure secure retention of the casing 24 in its selected arrested position, the pawl 39 is elastically yieldable or flexible to a predetermined extent, and is urged toward the outer circumferential surface of the casing 24 to enter the respective recess 38 and stay there until forced out by a deliberate action of the user.

As shown, the recesses 38 (only one of which is specifically designated in order not to unduly encumber the drawing) are equidistantly spaced from one another by an angular distance of 30°, which means that the casing 24 can be turned from a neutral position (identified as 0°), in which the scanning laser beam is issued in a direction opposite to that directly facing the user, either to the right or to the left, and is preferably arrested only at 30°, 60° and 90°. This means that, in its arrested positions, the laser beam is aimed either altogether away from the user, or to his or her full right or full left, or somewhere in between, but never towards the user. Consequently, the user can scan labels no matter where they are located or how they are oriented by simply turning the casing 24 into the appropriate arrested position, without ever sacrificing the possibility of using the devices 15, 16 and 17 simultaneously with scanning.

As mentioned before, the strap 36 can be moved or flipped between its two end positions. To this end, there is provided in the back portion 28 of the housing 11 a closed-ended arcuate channel 42 that receives a shuttle 43 for movement therein between its two end positions. The strap 36 is threaded through and/or otherwise connected to the shuttle 43 for movement therewith between its end positions. Moreover, the shuttle 43 can be detained in either one of its end positions, thus keeping the strap 36 in one or the other of its end positions illustrated in FIG. 6.

To accomplish this detention, an engaging pawl 44 is provided at each end of the channel 42. The engaging pawl 44 is separated from the remainder of the housing 11 by a slot 45 and is flexibly urged into the channel. This means that, when the shuttle 43 is in its respective end position, such as all the way to the left as shown in FIG. 6, the engaging pawl 44 engages behind the shuttle 43 and keeps the same in place until a sufficient force is deliberately applied to the shuttle to break such engagement. It may be noted that the engaging pawl 44 and the shuttle 43 have compatibly configured rounded shapes to provide for safe engagement and yet unproblematical release when desired.

FIG. 7 of the drawing, besides completing the picture. shows how the writing implement 18 is received in the recess 19 provided therefor in the bottom region of the housing 11. It may be perceived from a comparison of FIG. 7 of the drawing with FIG. 1 that the writing implement 18 is indeed relatively flat, that is its thickness amounts to only a small fraction of its height.

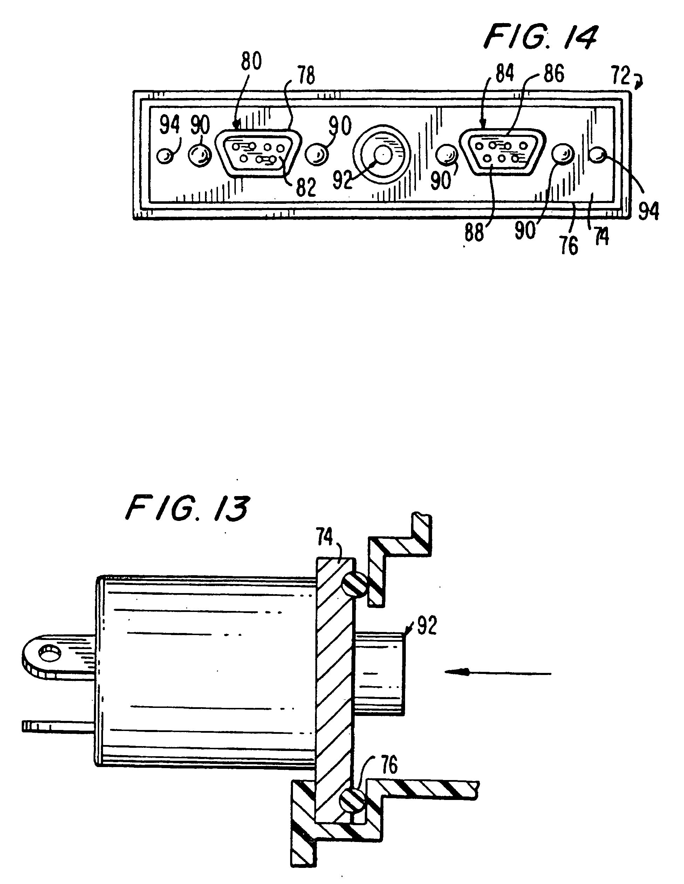

FIG. 7 also shows a multi-connector assembly 72 sealingly mounted at the bottom region of the housing. As explained in detail below in connection with FIGS. 13 and 14, the assembly 72 is a novel power and communications interface.

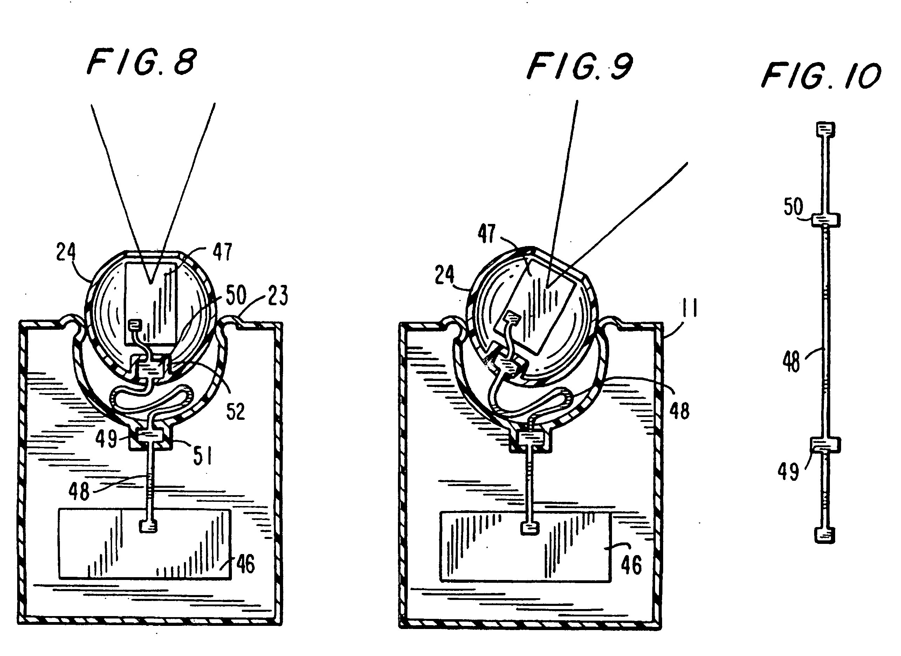

FIGS. 8 to 10 show, in a manner that is not necessarily completely consistent with the implementation discussed above, an arrangement that can be used in such an implementation for connecting a device 46 accommodated in the interior of the housing 11 with another device 47 (as shown, a light scanning device) accommodated in the interior of the casing 24.

This connecting arrangement includes an elongated flexible element 48 that is capable of conducting the signals that are to be transferred between the devices 46 and 47, be they electrical or optical. The respective ends of the element 48 are connected to the devices 46 and 47 in any known manner that renders possible transmission and/or reception of such signals by the respective device 46 or 47. As may be seen in FIGS. 8 and 9, the part-spherical casing 24 is so mounted in the enlarged housing portion 23 that a substantial amount of space is available between the two of them. A portion of the flexible element 48 extends through this space along a rather tortuous path. The length of this portion of the flexible element 48 is chosen such as to assure that this portion will not become taut in any position of the casing 24 relative to the housing 11. This means that the flexible element 48 is not stressed in tension no matter how the casing 24 is manipulated.

FIGS. 8 to 10 also show that the flexible element 48 has two retaining formations 49 and 50 secured thereto, preferably molded thereon. These retaining formations 49 and 50 are received in respective chambers 51 and 52 provided in the housing 11 and the casing 24. The presence of such formations means that any stresses that may originate in, or be applied to, the portion of the flexible element 48 located between the formations 49 and 50 will not be permitted to propagate beyond such formations 49 and 50, so that the otherwise existing possibility that the ends of the flexible element 48 could be torn out of or away from the respective devices 46 and 47 during and as a result of manipulation of the casing 24 is, for all intents and purposes, eliminated.

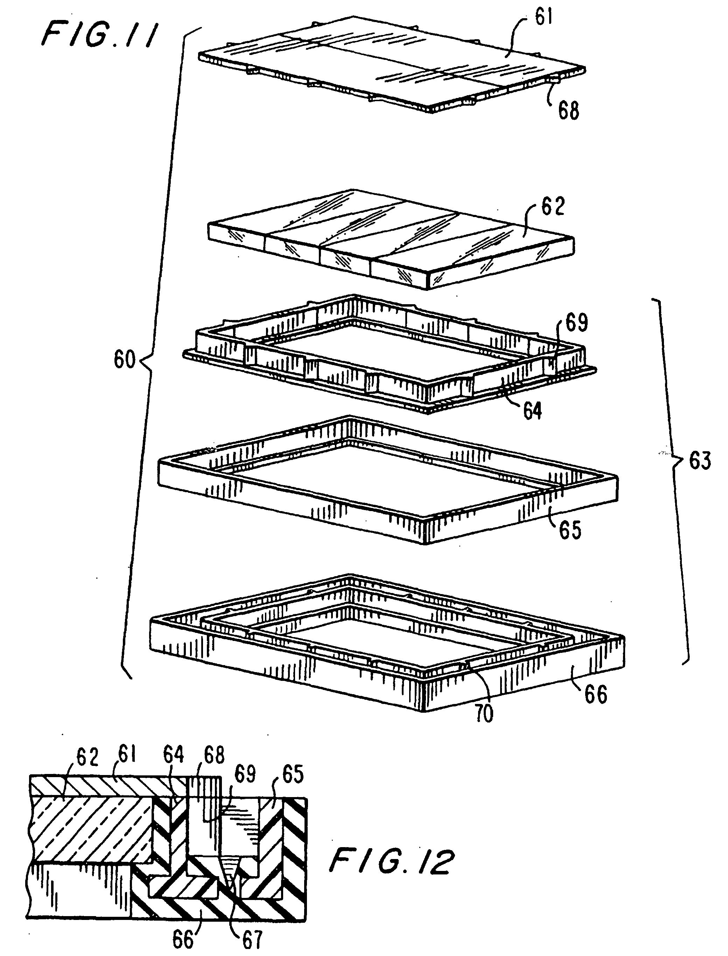

FIGS. 11 and 12 of the drawing depict a novel construction of a display or a similar device 60. As shown, the device 60 inciudes a backing plate 61, a liquid crystal display (LCD) plate 62, and an arrangement 63 for mounting the plates 61 and 62 on a support. The device 60 can be used in the form disclosed instead of the device 14. In the alternative, the mounting arrangement 63 of the device 60 can be used to mount the devices 15, 16 and 17 and others that cumulatively constitute the device 14 of FIG. 1 on the main portion 12 of the housing 11.

The mounting arrangement 63, in turn, includes an internal frame 64, a housing 65. and an overmold 66. Before going any further into the details of construction and cooperation of the various components 61 to 66 of the device 60, it is to be mentioned that, for the sake of clarity, the device 60 is shown in FIGS. 11 and 12 in a position and orientation as if it were to be mounted on an overhead support, that is, with the innermost of its components (the backing plate 61) being shown on top, and the outermost one (the overmold 66) being situated at the bottom, and that the support on which the device 60 is to be mounted has been omitted. Suffice it to say that such a support includes a peripheral portion, such as a rib structure, having an internal surface that circumferentially bounds a recess for receiving a part of the device 60, and that the device 60 is held in place once installed on the support by frictional or interference engagement of respective substantially triangular protuberances or teeth 68 and 69 provided at least on the backing plate 61 and on the internal frame 64.

At this juncture, it ought to be mentioned that the backing plate 61 and the internal frame 64 are of relatively hard materials, typically of metal and hard synthetic plastic material, respectively, so that they exercise a pronounced retaining action when inserted into the aforementioned recess with an interference fit. As a matter of fact, this retaining action is so reliable that it is not necessary to use any screws or similar fastening elements for connecting the device 60 to the support. Moreover, as shown, the overmold 66, which is typically made of a softer synthetic plastic material than the internal frame 64, such as of rubber, may be provided with its own protuberances or teeth 70 as well. Because of the softer nature of this material, however, the engagement of such teeth 70 with the support is more in the nature of a frictional, sealed fit.

It may be seen especially in FIG. 12 of the drawing that the LCD plate 62 is backed up over its entire back surface by the backing plate 61 and surrounded over its entire periphery by the internal frame 64. However, unlike the backing plate 61, the internal frame 64 is not in direct contact with the LCD plate 62; rather, a portion of the overmold 66 is interposed between the internal frame 64 and the LCD plate.

As mentioned before, the overmold 66 is of a relatively soft material, such as rubber, which is additionally resiliently yieldable. This means that the LCD plate 62 is held in position in a shock-resistant manner in that the resiliently yieldable material of the overmold 66 absorbs shocks to which the support may be supported or prevents their transmission from the support to the LCD plate 62. The overmold 66 also sealingly engages the LCD plate 62 in a moisture-resistant and contaminant-resistant manner. The housing or external frame 65 is situated on the outside of the aforementioned rib-shaped structure of the support and all around it.

In accordance with the present invention, the overmold 66 has another portion that is integral with the first-mentioned portion and extends over the housing 65 into a substantially coextensive juxtaposition with the outer peripheral surface of the latter. The cooperation of these two portions of the overmold 66 with one another and with the underlying structure, coupled with the resilient character of the overmold material, further reduces the danger that shocks could be imparted to the underlying structure and via the same to the rather fragile LCD plate 62. By the same token, the resilient character of the overmold material protects the user from possible pain or even injury ensuing from inadvertently hitting the relatively hard underlying structure or coming in contact with any relatively sharp edges thereof.

The overmold 66 further includes an additional portion that penetrates into the space between the internal and external frames 64 and 65. This portion further improves on the shock resistant characteristic of the arrangement 63 in that it dampens or substantially eliminates the transmission of shock waves and similar forces from the external frame or housing 65 to the internal frame 64.

This portion of the overmold 66 is provided with a channel 67 shown to have a substantially triangular cross section. This channel 67, besides further enhancing the shock transmission reduction or elimination effect, creates a structure that will be referred to herein as a living hinge, due to the weakening of the overmold 66 at the affected region by the presence of the channel 67 thereat. This living hinge facilitates the assembly of the device 60 in that it permits the outer portion of the overmold 66 to be manipulated substantially independently of the inner portion, thus allowing such outer portion to be rather easily maneuvered into its position over the outer frame 65 after the inner overmold portion has already been positioned over and around the internal frame 64.

Turning now to FIGS. 13 and 14, the multi-connector assembly 72 includes a generally rectangular support plate 74 having an outer surface in which a generally rectangular elastomeric seal or gasket 76 is integrally molded. A first multi-terminal connector 80 of the RS232 type has a metallic shield 78, and a plurality of sockets 82 within the shield 78 and passing through the plate 74 to establish a two-way communications port for a host computer, for example, to communicate with the electronic circuitry within the data collection device. A second multi-pin connector 84, also of the RS232 type, has a metallic shield 86, and a plurality of pins 88 within the shield 86 and passing through plate 74 to establish a two-way communications port for a keyboard, for example, to communicate with the electronic circuitry within the data collection device. Each connector 80, 84 has its own pair of threaded standoffs 90 to lock in place the mating connectors by use of corresponding jack screws. A power connector 92 is located between the connectors 80, 84 and has a shield that extends through the plate 74 to supply DC power to the device, either for current operation, or for recharging on-board rechargeable batteries for future operation.

The plate 74 can be constituted of a conductive plastic, or of a nonconductive plastic in which is molded a metallic shield electrically connected to the shields of the connectors 80, 84, 92 as well as to the ground pins/sockets of the connectors 80, 84, 92. All pin and socket interfaces are sealed by insert molding. It is currently preferred to constitute the plate 74 of a die-cast metal such as aluminum or zinc, in which case the shield within the plate is eliminated.

As shown is FIG. 13, the gasket 76 is held in a sealing relationship with the housing of the device to prevent entry of moisture and contaminants. Threaded bosses 94 receive screws to seal the assembly to the housing,

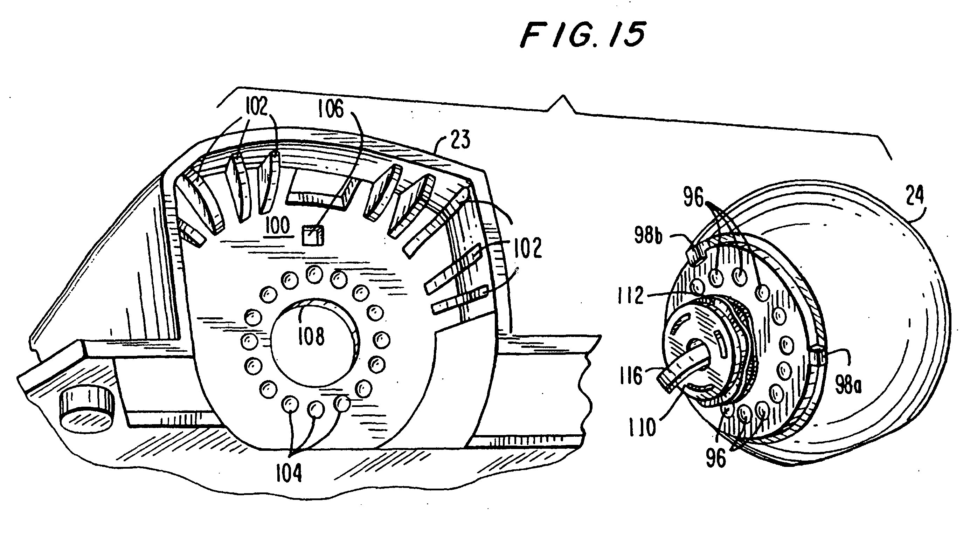

Turning now to FIGS. 15-18, it will be recalled from the above discussion in connection with FIG. 5 that the casing 24 is to be arrested in any of a plurality of positions relative to the enlargement 23 of the main portion 12 of the housing 11. The embodiment of FIGS. 15-18 is currently preferred over the FIG. 5 embodiment and, as best shown in FIG. 15, the underside of the casing 24 is provided with a series of circumferentially spaced bumps 96, and a pair of end-limiting stops 98a, 98b spaced angularly apart, preferably by an obtuse angle slightly greater than 180°.

The enlargement 23 has an inner well reinforced by integrally molded ribs 102, and a base wall 100 provided with a series of circumferentially spaced detaining recesses 104. The recesses 104 correspond in number to the bumps 96. An abutment 106 is integrally molded on the base wall and, as noted below, is engaged by the stops 98a, 98b in the end-limiting positions of the casing 24 relative to the housing.

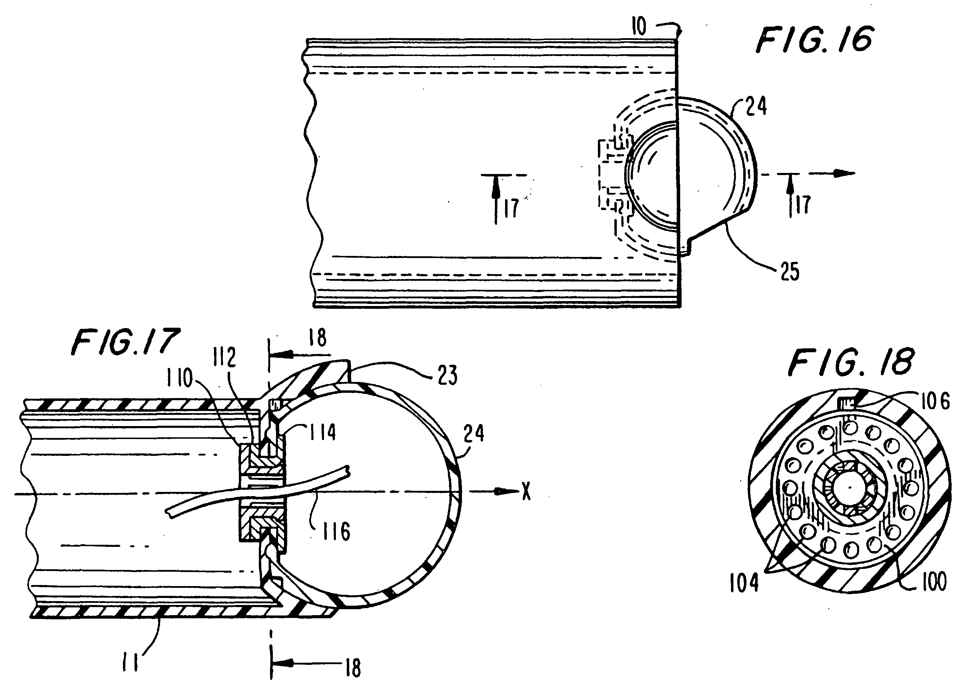

The bottom of the casing 24 extends through a mounting hole 108 in the base wall and, in the assembled position shown in FIG. 17, a back plate 110 under the urging of a wave spring 112 and located behind the base wall resiliently holds the casing 24 from falling out of the enlargement 23. An O-ring seal 114 between the casing 24 and the base wall 100 provides resistance to moisture and contaminant penetration.

In operation, the casing 24 is rotatable in either circumferential direction about axis X. The bumps 96 ride into, along and out of the facing recesses until the casing 24 or, more precisely, the window 25 is facing in a desired direction, at which time the bumps 96 are detained in the recesses. The casing 24 cannot be moved past either end-limiting position in which the stops 98a or 98b engage the abutment 106.

Two-way electrical communication between the electronic components in the casing and in the housing is obtained via a flexible, ribbon-like cable 116 which replaces, in the preferred embodiment, the aforementioned flexible element 48 described above in FIGS. 8 to 10.

It will be understood that each of the elements described above, or two or more together, may also find a useful application in other types of constructions differing from the type described above.

While the present invention has been described and illustrated herein as embodied in a specific construction of a data collection terminal, it is not limited to the details of this particular construction, since various modifications and structural changes may be made without departing from the scope of the present invention as defined in the appended claims.

## Claims

1. A hand-held electronic device (10), comprising:
a housing (11) having a top portion (23);
a casing (24) mounted in said top portion (23) for movement relative to the housing (11);
information processing means (46, 47) in said housing (11) and said casing (24); and
a connector (48) for connecting said information processing means (46) in said housing (11) with said information processing means (47) in said casing (24);
**characterized in that**:
a) said casing (24) is mounted in said top portion (23) of said housing (11) for movement among more than two operating positions; and
b) said connector (48) is an elongated flexible element having one end region connected to the information processing means (46) in said housing (11) and an opposite end region connected to the information processing means (47) in said casing (24), said flexible element flexing and changing in shape as said casing (24) is moved among said operating positions.

2. The device as defined in claim 1, further comprising means (38-41; 96, 104) for arresting said casing in at least one of said operating positions.

3. The device as defined in claim 2, wherein said arresting means (96, 104) includes a plurality of detents and a plurality of the recesses, one of said pluralities being provided on said casing, and the other of said pluralities being provided. on said housing.

4. The device as defined in claim 1, wherein
said housing has a front side facing a user when the device is in use, and an oppositely facing back side;
said device further comprising:
means accessibly located at said front side of said housing for exchanging information with said information processing means; and
means on said back side for forming a handgrip configured to be substantially conformingly received in the palm of the hand of the user.

5. The hand-held electronic device as defined in claim 4, wherein said forming means gives said handgrip a generally barrel-shaped configuration at a central region of said back side.

6. The hand-held electronic device as defined in claim 4, wherein said housing further has a bottom portion opposite to said top portion; and wherein said forming means includes at least one diverging surface that diverges in a direction toward said bottom portion.

7. The hand-held electronic device as defined in claim 6, and further comprising detection means at least partially accommodated in said housing and operative for gathering information for use by said information processing means when activated; and further including means for activating said detection means, including at least one trigger button situated on said diverging surface and enclosing an acute angle of a predetermined magnitude with at least one central plane of the electronic device.

8. The hand-held electronic device as defined in claim 7; wherein said one central plane is that which separates said front side from said back side of said housing.

9. The hand-held electronic device as defined in claim 8, wherein said predetermined magnitude of said acute angle is on the order of 45°.

10. The hand-held electronic device as defined in claim 7, wherein said one central plane is a symmetry plane of said housing extending substantially normal to said front and back sides from said top portion to said bottom portion of said housing.

11. The hand-held electronic device as defined in claim 10, wherein said predetermined magnitude of said acute angle is on the order of 30°.

12. The hand-held electronic device as defined in claim 6, and further comprising detection means at least partially accommodated in said housing and operative for gathering information for use by said information processing means when activated; and further including means for activating said detection means, including at least one trigger button situated on said diverging surface and enclosing a first acute angle of a first predetermined magnitude with a central plane of the electronic device that separates said front side from said back side of said housing, and a second acute angle of a second predetermined magnitude with a central symmetry plane of said housing that extends substantially normal to said front and back sides from said top portion to said bottom portion of said housing.

13. The hand-held electronic device as defined in claim 12, wherein said first predetermined magnitude is on the order of 45° and said second predetermined magnitude is on the order of 30°.

14. The hand-held electronic device as defined in claim 12, wherein said at least one trigger button is situated at a region of said handgrip with which the tip of the forefinger of one hand of the user is juxtaposed when the user holds the device in its intended position of use.

15. The hand-held electronic device as defined in claim 14, wherein said at least one trigger button has a dish-shaped configuration.

16. The hand-held electronic device as defined in claim 6, wherein said diverging surface includes two opposite side zones arranged mirror-symmetrically with respect to a symmetry plane of said housing; wherein said at least one trigger button is situated at one of said side zones; and further comprising an additional trigger button similar to said one trigger button and situated at the other of said side zones substantially mirror-symmetrically with respect to said one trigger button.

17. The hand-held electronic device as defined in claim 16, and further comprising a strap extending along, and at a distance from, said handgrip and operative for confining the hand of the user between itself and said handgrip when the electronic device is being held by the user.

18. The hand-held electronic device as defined in claim 17, wherein said strap has one end portion articulated to a fixed location of said bottom portion of said housing, and another end portion; and further comprising means for mounting said other end portion of said strap on said back portion of said housing at a distance from said bottom portion that exceeds the expected width of the hand of any potential user for movement between two end positions in each of which said strap extends across the back of whichever hand the user happens to use to hold the electronic device by said handgrip in spaced relationship with respect to all knuckles and joints of that hand.

19. The hand-held electronic device as defined in claim 18, wherein said strap extends in each of said end positions thereof along a course that diverges by a predetermined acute angle from said symmetry plane from said one to said other end portion of said strap.

20. The hand-held electronic device as defined in claim 1, wherein said casing has a substantially dome-shaped configuration.

21. The hand-held electronic device as defined in claim 20, and further comprising means for arresting said casing in positions angularly offset from one another.

22. The hand-held electronic device as defined in claim 20, and further comprising optical scanning means for scanning at least one of a light beam and a field of view, and including an optical train at least a part of which is accommodated in said casing; wherein said dome-shaped casing includes a window for the passage of said light beam therethrough; and further comprising means for communicating at radio frequency with a remote location, including an antenna mounted on said casing rearwardly of said window for joint movement with said casing so as to always be outside the field of view and the light beam.

23. The hand-held electronic device as defined in claim 1, and further comprising means for enhancing traction between at least selected portions of the hand of the user and corresponding portions of said handgrip.

24. The hand-held electronic device as defined in claim 23, wherein said enhancing means includes dimples in said corresponding portions of said handgrip.

25. The hand-held electronic device as defined in claim 23, wherein said handgrip has two side surfaces; and wherein said enhancing means is situated at that zone of at least one of said side surfaces with which the tip of the thumb of the user is juxtaposed when the device is being used.

26. The hand-held electronic device as defined in claim 1, and further comprising a bulging projection at said back side and bounding a battery-receiving compartment.

27. The hand-held electronic device as defined in claim 26, and further comprising foot formations on said projection and said back side for supporting the device on a generally horizontal support surface.

28. The hand-held electronic device as defined in claim 1, and further comprising a cavity at a bottom portion of said housing, and a stylus frictionally held in said cavity in a stowed position.

29. The hand-held electronic device as defined in claim 28, wherein said stylus has a pair of marking ends.

30. The device as defined in claim 1, further including an arrangement for mounting a plate-shaped element having a front and a rear surface in a support structure opening that is bounded by an inner peripheral surface, comprising:
a) means for supporting the plate-shaped element in the opening, including a substantially rigid internal frame firmly engaging the inner peripheral surface and spacedly surrounding the plate-shaped element to form an intervening gap; and
b) an overmold of a resiliently yieldable material including an embracing portion that extends around said internal frame and penetrates into said gap to fill the same and form a shock-absorbing barrier therein.

31. The device as defined in claim 30, wherein said supporting means further includes a substantially rigid backing plate firmly engaging the inner peripheral surface adjacent said internal frame and juxtaposed with the rear surface of the plate-shaped element to support the latter from behind.

32. The device as defined in claim 30, and further comprising a substantially rigid external frame surrounding said internal frame with a predetermined spacing therefrom; and wherein said overmold further includes an extension portion integral with said embracing portion and extending therefrom around said external frame.

33. The device as defined in claim 32, and wherein said overmold further includes an additional portion integral with and situated between said embracing and extension portions and penetrating into said spacing between said internal and external frames to provide an additional shock-absorbing barrier therebetween.

34. The device as defined in claim 33, wherein said additional portion of said overmold penetrates into said spacing only to a limited extent, being delimited therein by a delimiting surface; and wherein said overmold further includes means for bounding in said additional portion an elongated channel that opens onto said delimiting surface and forms a living hinge in said additional portion intermediate said embracing and extension portions.

35. The device as defined in claim 34, wherein said channel has a substantially V-shaped cross section.

36. The device defined in claim 1, further comprising a multi-connector assembly, comprising:
a) a plate;
b) a pair of multi-terminal connectors mounted on, and extending through, the plate;
c) a power connector mounted on, and extending through, the plate;
d) a seal integrally molded with the plate for sealing the plate to a device.

37. The assembly as defined in claim 36, wherein each connector has a shield electrically connected to the plate.

38. The assembly as defined in claim 36, wherein the seal is an elastomeric gasket.

39. The assembly as defined in claim 37, wherein each shield is integral with the plate.

## Patentansprüche

1. Eine in der Hand gehaltene elektronische Einrichtung (10), die Folgendes aufweist:
ein Gehäuse (11) mit einem oberen bzw. Oberteil (23);
eine Verkleidung (24), die am Oberteil (23) für eine Bewegung relativ zum Gehäuse (11) angebracht ist;
Informationsverarbeitungsmittel (46, 47) im Gehäuse (11) und der Verkleidung (24); und
einen Verbinder (48) zum Verbinden der Informationsverarbeitungsmittel (46) im Gehäuse (11) mit den Informationsverarbeitungsmitteln (47) in der Verkleidung (24);
**dadurch gekennzeichnet, dass**:
a) die Verkleidung (24) in dem Oberteil (23) des Gehäuses (11) für eine Bewegung zwischen mehr als zwei Betriebspositionen angebracht ist; und
b) der Verbinder (48) ein langgestrecktes flexibles Element ist, bei dem ein Endbereich mit den Informationsverarbeitungsmitteln (46) im Gehäuse (11) verbunden ist und ein entgegengesetzter Endbereich mit den Informationsverarbeitungsmitteln (47) in der Verkleidung (24) verbunden ist,
wobei das flexible Element sich biegt und seine Form verändert, wenn die Verkleidung (24) zwischen den Betriebspositionen bewegt wird.

2. Die Einrichtung nach Anspruch 1, die des Weiteren Mittel (38-41; 96, 104) zum Feststellen der Verkleidung in mindestens einer der Betriebspositionen aufweist.

3. Die Einrichtung nach Anspruch 2, wobei die Feststellmittel (96, 104) eine Vielzahl von Rasten und eine Vielzahl von Ausnehmungen umfassen, wobei eine Vielzahl an der Verkleidung vorgesehen ist und die andere Vielzahl am Gehäuse vorgesehen ist.

4. Die Einrichtung nach Anspruch 1, wobei das Gehäuse eine Vorderseite besitzt, die zu einem Benutzer hin weist, wenn die Einrichtung verwendet wird, und eine entgegengesetzt weisende Rückseite;
wobei die Einrichtung des Weiteren Folgendes aufweist:
Mittel, die zugänglich an der Vorderseite des Gehäuses gelegen sind, um Information mit den Informationsverarbeitungsmitteln auszutauschen; und
Mittel an der Rückseite zum Formen eines Handgriffs, der konfiguriert ist, um im Wesentlichen passend bzw. konform in der Hand eines Benutzers aufgenommen zu werden.

5. Die in der Hand gehaltene elektronische Einrichtung nach Anspruch 4, wobei die Formgebungsmittel dem Handgriff eine im Allgemeinen lauf- bzw. fassförmige Konfiguration in einem Mittelbereich der Rückseite geben.

6. Die in der Hand gehaltene elektronische Einrichtung nach Anspruch 4, wobei das Gehäuse des Weiteren einen Bodenteil besitzt, der dem Oberteil entgegengesetzt ist bzw. gegenüberliegt; und wobei die Formgebungsmittel mindestens eine divergierende Oberfläche umfassen, die in eine Richtung zum Bodenteil hin divergiert.

7. Die in der Hand gehaltene elektronische Einrichtung nach Anspruch 6, die des Weiteren Detektiermittel aufweist, die zumindest teilweise im Gehäuse untergebracht sind und funktionieren, um bei Aktivierung Information zur Verwendung durch die Informationsverarbeitungsmittel zusammenzutragen; und die des Weiteren Mittel zum Aktivieren der Detektiermittel umfasst, die mindestens einen Auslöseknopf umfassen, der an der divergierenden Oberfläche angeordnet ist und einen spitzen Winkel von einer vorbestimmten Größe mit der mindestens einen Mittelebene der elektronischen Einrichtung bildet.

8. Die in der Hand gehaltene elektronische Einrichtung nach Anspruch 7, wobei die eine Mittelebene diejenige ist, die die Vorderseite von der Rückseite des Gehäuses trennt.

9. Die in der Hand gehaltene elektronische Einrichtung nach Anspruch 8, wobei die vorbestimmte Größe des spitzen Winkels in der Größenordnung von 45° ist.

10. Die in der Hand gehaltene elektronische Einrichtung nach Anspruch 7, wobei die eine Mittelebene eine Symmetrieebene des Gehäuses ist, die sich im Wesentlichen normal bzw. senkrecht zu den Vorder- und Rückseiten vom Oberteil zum Bodenteil des Gehäuses erstreckt.

11. Die in der Hand gehaltene elektronische Einrichtung nach Anspruch 10,
wobei die vorbestimmte Größe des spitzen Winkels in der Größenordnung von 30° ist.

12. Die in der Hand gehaltene elektronische Einrichtung nach Anspruch 6, die des Weiteren Detektiermittel umfasst, die zumindest teilweise in dem Gehäuse untergebracht sind und funktionieren, um bei Aktivierung Information zur Verwendung durch die Informationsverarbeitungsmittel zusammenzutragen; und die des Weiteren Mittel zum Aktivieren der Detektiermittel umfasst, die mindestens einen Auslöseknopf umfassen, der an der divergierenden Oberfläche angeordnet ist und einen ersten spitzen Winkel von einer ersten vorbestimmten Größe mit einer Mittelebene der elektronischen Einrichtung bildet, die die Vorderseite von der Rückseite des Gehäuses trennt, und einen zweiten spitzen Winkel von einer zweiten vorbestimmten Größe mit einer Mittelsymmetrieebene des Gehäuses bildet, die sich im Wesentlichen senkrecht zu den Vorder- und Rückseiten vom Oberteil zum Bodenteil des Gehäuses erstreckt.

13. Die in der Hand gehaltene elektronische Einrichtung nach Anspruch 12, wobei die erste vorbestimmte Größe in der Größenordnung von 45° ist und die zweite vorbestimmte Größe in der Größenordnung von 30° ist.

14. Die in der Hand gehaltene elektronische Einrichtung nach Anspruch 12, wobei der mindestens eine Auslöseknopf in einem Bereich des Handgriffs angeordnet ist, der neben der Spitze des Zeigefingers einer Hand liegt, wenn der Benutzer die Einrichtung in ihrer beabsichtigen Verwendungsposition hält.

15. Die in der Hand gehaltene elektronische Einrichtung nach Anspruch 14, wobei der mindestens eine Auslöseknopf eine tellerförmige Konfiguration hat.

16. Die in der Hand gehaltene elektronische Einrichtung nach Anspruch 6, wobei die divergierende Oberfläche zwei entgegengesetzte Seitenzonen besitzt, die spiegelsymmetrisch in Bezug auf eine Symmetrieebene des Gehäuses angeordnet sind; wobei der mindestens eine Auslöseknopf an einer der Seitenzonen angeordnet ist; und die des Weiteren einen zusätzlichen Auslöseknopf ähnlich dem einen Auslöseknopf und an der anderen Seitenzone angeordnet aufweist, und zwar im Wesentlichen spiegelsymmetrisch in Bezug auf den einen Auslöseknopf.

17. Die in der Hand gehaltene elektronische Einrichtung nach Anspruch 16, und die des Weiteren einen Riemen bzw. Streifen aufweist, der sich entlang des Handgriffs und in Abstand dazu erstreckt und funktioniert, um die Hand des Benutzers zwischen ihm selbst und dem Handgriff einzuschließen, wenn die elektronische Einrichtung vom Benutzer gehalten wird.

18. Die in der Hand gehaltene elektronische Einrichtung nach Anspruch 17, wobei der Riemen einen Endteil besitzt, der gelenkmäßig an einer festen Stelle des Bodenteils des Gehäuses befestigt ist, und einen weiteren Endteil besitzt; und die des Weiteren Mittel zum Befestigen des anderen Endteils des Riemens am Rückteil des Gehäuses aufweist, und zwar in Abstand zum Bodenteil, der die erwartete Breite der Hand eines möglichen Benutzers überschreitet, und zwar für eine Bewegung zwischen zwei Endpositionen, von denen sich in jeder der Riemen über den Rücken welcher Hand auch immer der Benutzer verwenden sollte erstreckt, um die elektronische Einrichtung durch den Handgriff in einer beabstandeten Beziehung in Bezug auf alle Knöchel und Gelenke dieser Hand zu halten.

19. Die in der Hand gehaltene elektronische Einrichtung nach Anspruch 18, wobei sich der Riemen in jeder der Endpositionen davon entlang eines Weges erstreckt, der um einen vorbestimmten spitzen Winkel von der Symmetrieebene divergiert, und zwar von dem einen zu dem anderen Endteil des Riemens.

20. Die in der Hand gehaltene elektronische Einrichtung nach Anspruch 1, wobei die Verkleidung eine im Wesentlichen kuppelförmige Konfiguration hat.

21. Die in der Hand gehaltene elektronische Einrichtung nach Anspruch 20, und die des Weiteren Mittel zum Feststellen der Verkleidung in Positionen aufweist, die in einem Winkel voneinander versetzt sind.

22. Die in der Hand gehaltene elektronische Einrichtung nach Anspruch 20, und die des Weiteren optische Scanmittel zum Scannen des mindestens einen Lichtstrahls und eines Gesichtsfeldes aufweist und einen optischen Strang umfasst, von dem zumindest ein Teil in der Verkleidung untergebracht ist; wobei die kuppelförmige Verkleidung ein Fenster für das Durchgehen des Lichtstrahls dahindurch umfasst; und die des Weiteren Mittel zum Kommunizieren auf einer Funkfrequenz mit einer fern gelegenen Stelle aufweist, einschließlich einer Antenne, die an der Verkleidung rückwärts vom Fenster angebracht ist zur gemeinsamen Bewegung mit der Verkleidung, um stets außerhalb des Gesichtsfeldes und des Lichtstrahls zu sein.

23. Die in der Hand gehaltene elektronische Einrichtung nach Anspruch 1, und die des Weiteren Mittel zum Verstärken von Haftung bzw. Reibung zwischen zumindest ausgewählten Teilen der Hand des Benutzers und entsprechenden Teilen des Handgriffs aufweist.

24. Die in der Hand gehaltene elektronische Einrichtung nach Anspruch 23, wobei die Verstärkungsmittel Vertiefungen in den entsprechenden Teilen des Handgriffs umfassen.

25. Die in der Hand gehaltene elektronische Einrichtung nach Anspruch 23, wobei der Handgriff zwei Seitenoberflächen besitzt; und wobei die Verstärkungsmittel an der Zone der mindestens einen der Seitenoberflächen angeordnet sind, neben der die Spitze des Daumens des Benutzers liegt, wenn die Einrichtung verwendet wird.

26. Die in der Hand gehaltene elektronische Einrichtung nach Anspruch 1, und die des Weiteren einen wulstartigen Vorsprung an der Rückseite und an ein Batterien aufnehmendes Fach angrenzend aufweist.

27. Die in der Hand gehaltene elektronische Einrichtung nach Anspruch 26, und die des Weiteren Fußausbildungen an dem Vorsprung und der Rückseite aufweist zum Tragen der Einrichtung auf einer im Allgemeinen horizontalen Tragoberfläche.

28. Die in der Hand gehaltene elektronische Einrichtung nach Anspruch 1, und die des Weiteren einen Hohlraum an einem Bodenteil des Gehäuses aufweist, sowie einen Griffel bzw. Stylus, der in dem Hohlraum reibungsmäßig in einer verstauten Position gehalten ist.

29. Die in der Hand gehaltene elektronische Einrichtung nach Anspruch 28, wobei der Griffel ein Paar von Markierenden besitzt.

30. Die Einrichtung nach Anspruch 1, die des Weiteren eine Anordnung zum Befestigen eines plattenförmigen Elements umfasst, und zwar mit einer Vorder- und einer Rückseite in einer Tragstrukturöffnung, die durch eine Innenumfangsoberfläche begrenzt ist, wobei die Anordnung Folgendes aufweist:
a) Mittel zum Tragen des plattenförmigen Elements in der Öffnung, einschließlich eines im Wesentlichen steifen Innenrahmens, der fest in Eingriff mit der Innenumfangsoberfläche steht und das plattenförmige Element beabstandet umgibt, um einen dazwischen liegenden Spalt zu bilden; und
b)eine Überspritzung bzw. Armierung aus elastisch nachgebendem Material, die einen umfassenden Teil aufweist, der sich um den Innenrahmen herum erstreckt und in den Spalt eindringt, um selbigen zu füllen und darin eine Schock absorbierende bzw. Stoß dämpfende Barriere zu bilden.

31. Die Einrichtung nach Anspruch 30, wobei die Tragmittel des Weiteren eine im Wesentlichen steife Rücken- bzw. Verstärkungsplatte umfassen, die fest an der Innenumfangsoberfläche benachbart zum Innenrahmen und neben der hinteren Oberfläche des plattenförmigen Elements liegend eingreifen, um letzteres von hinten zu tragen.

32. Die Einrichtung nach Anspruch 30, und die des Weiteren einen im Wesentlichen steifen Außenrahmen aufweist, der den Innenrahmen in einem vorbestimmten Abstand dazu umgibt; und wobei die Überspritzung des Weiteren einen Erstreckungsteil umfasst, der mit dem umfassenden Teil integral ist und sich davon um den Außenrahmen herum erstreckt.

33. Die Einrichtung nach Anspruch 32, und wobei die Überspritzung des Weiteren einen zusätzlichen Teil umfasst, der integral mit den umfassenden und Erstreckungsteilen und zwischen ihnen angeordnet ist und in den Abstand zwischen den Innen- und Außenrahmen eindringt, um dazwischen eine zusätzliche Stoß dämpfende Barriere vorzusehen.

34. Die Einrichtung nach Anspruch 33, wobei der zusätzliche Teil der Überspritzung nur zu einem begrenzten Maß in den Abstand eindringt, worin er von einer Abgrenzungsoberfläche abgegrenzt wird; und wobei die Überspritzung des Weiteren Mittel zum Begrenzen eines langgestreckten Kanals in dem zusätzlichen Teil umfasst, der sich auf die Abgrenzungsoberfläche öffnet und in dem zusätzlichen Teil ein dynamisches Scharnier zwischen den umfassenden und den Erstreckungsteilen bildet.

35. Die Einrichtung nach Anspruch 34, wobei der Kanal einen im Wesentlichen V-förmigen Querschnitt besitzt.

36. Die Einrichtung nach Anspruch 1, die des Weiteren eine Anordnung mit mehreren Verbindern aufweist, die Folgendes aufweist:
a) eine Platte;
b)ein Paar von Verbindern mit mehreren Anschlüssen, die an der Platte angebracht sind und sich durch sie erstrecken;
c) einen Leistungsverbinder, der an der Platte angebracht ist und sich durch sie erstreckt;
d)eine Abdichtung, die integral mit der Platte gegossen bzw. geformt ist, um die Platte gegenüber einer Einrichtung abzudichten.

37. Die Anordnung nach Anspruch 36, wobei jeder Verbinder einen elektrisch mit der Platte verbundenen Schirm bzw. eine Abschirmung besitzt.

38. Die Anordnung nach Anspruch 36, wobei die Abdichtung ein Elastomerdichtring ist.

39. Die Anordnung nach Anspruch 37, wobei jeder Schirm mit der Platte integral ist.

## Revendications

1. Dispositif électronique portatif (10), comprenant :
une enceinte (11) ayant une partie supérieure (23) ;
un boîtier (24) monté sur ladite partie supérieure (23) pour être mobile par rapport à l'enceinte (11) ;
des moyens de traitement d'informations (46, 47) dans ladite enceinte (11) et dans ledit boîtier (24) ; et
un connecteur (48) pour connecter le moyen de traitement d'informations (46) dans l'enceinte (11) au moyen de traitement d'informations (47) dans le boîtier (24) ; **caractérisé en ce que** :
a) le boîtier (24) est monté sur la partie supérieure (23) de l'enceinte (11) pour être mobile entre plus de deux positions de fonctionnement ; et
b) le connecteur (48) est un élément flexible allongé comportant une région d'extrémité connectée au moyen de traitement d'informations (46) dans l'enceinte (11) et une région d'extrémité opposée connectée au moyen de traitement d'informations (47) dans le boîtier (24), l'élément flexible se pliant et changeant de forme lorsque le boîtier (24) est déplacé parmi lesdites positions de fonctionnement.

2. Dispositif selon la revendication 1, comprenant en outre des moyens (38-41 ; 96, 104) pour arrêter le boîtier dans au moins une des positions de fonctionnement.

3. Dispositif selon la revendication 2, dans lequel les moyens d'arrêt (96, 104) comprennent une pluralité de crans et une pluralité d'évidements, l'une de ces pluralités étant prévue sur le boîtier, et l'autre de ces pluralités étant prévue sur l'enceinte.

4. Dispositif selon la revendication 1, dans lequel l'enceinte comporte un côté avant orienté vers un utilisateur lorsque le dispositif est en cours d'utilisation, et un côté arrière orienté de manière opposée ; le dispositif comprenant en outre :
un moyen situé de manière accessible sur ledit côté avant de l'enceinte pour échanger des informations avec les moyens de traitement d'informations ; et
un moyen sur ledit côté arrière pour former une zone de préhension configurée de manière à être reçue de façon sensiblement conforme dans la paume de la main de l'utilisateur.

5. Dispositif électronique portatif selon la revendication 4, dans lequel le moyen de forme donne à la zone de préhension une configuration généralement cylindrique dans une région centrale du côté arrière.

6. Dispositif électronique portatif selon la revendication 4, dans lequel l'enceinte comporte en outre une partie inférieure opposée à la partie supérieure ; et dans lequel le moyen de forme comprend au moins une surface divergente qui diverge dans une direction allant vers la partie inférieure.

7. Dispositif électronique portatif selon la revendication 6, et comprenant en outre un moyen de détection au moins en partie logé dans l'enceinte et pouvant agir pour recueillir des informations destinées à être utilisées par les moyens de traitement d'informations lorsqu'il est activé ; et comprenant en outre un moyen pour activer le moyen de détection, comprenant au moins un bouton de déclenchement situé sur la surface divergente et formant un angle aigu de valeur prédéterminée par rapport à au moins un plan central du dispositif électronique.

8. Dispositif électronique portatif selon la revendication 7, dans lequel le plan central est celui qui sépare le côté avant du côté arrière de l'enceinte.

9. Dispositif électronique portatif selon la revendication 8, dans lequel la valeur prédéterminée dudit angle aigu est de l'ordre de 45°.

10. Dispositif électronique portatif selon la revendication 7, dans lequel le plan central est un plan de symétrie de l'enceinte s'étendant sensiblement normalement aux côtés avant et arrière à partir de la partie supérieure vers la partie inférieure de l'enceinte.

11. Dispositif électronique portatif selon la revendication 10, dans lequel la valeur prédéterminée dudit angle aigu est de l'ordre de 30°.

12. Dispositif électronique portatif selon la revendication 6, et comprenant en outre un moyen de détection au moins en partie logé dans l'enceinte et pouvant agir pour recueillir des informations destinées à être utilisées par les moyens de traitement d'informations lorsqu'il est activé ; et comprenant en outre des moyens pour activer le moyen de détection, comportant au moins un bouton de déclenchement situé sur la surface divergente et formant un premier angle aigu d'une première valeur prédéterminée par rapport à un plan central du dispositif électronique qui sépare le côté avant du côté arrière de l'enceinte, et un second angle aigu d'une seconde valeur prédéterminée par rapport à un plan central de symétrie de l'enceinte qui s'étend sensiblement normalement aux côtés avant et arrière de la partie supérieure vers la partie inférieure de l'enceinte.

13. Dispositif électronique portatif selon la revendication 12, dans lequel la première valeur prédéterminée est de l'ordre de 45° et la seconde valeur prédéterminée est de l'ordre de 30°.

14. Dispositif électronique portatif selon la revendication 12, dans lequel ledit au moins un bouton de déclenchement est situé dans une région de la zone de préhension à laquelle le bout de l'index d'une main de l'utilisateur est juxtaposé lorsque l'utilisateur tient le dispositif dans la position dans laquelle il est destiné à être utilisé.

15. Dispositif électronique portatif selon la revendication 14, dans lequel ledit au moins un bouton de déclenchement a une forme de plateau.

16. Dispositif électronique portatif selon la revendication 6, dans lequel la surface divergente comprend deux zones latérales opposées agencées selon une symétrie spéculaire par rapport à un plan de symétrie de l'enceinte ; dans lequel ledit au moins un bouton de déclenchement est situé dans l'une desdites zones latérales ; et comprenant en outre un bouton de déclenchement supplémentaire semblable audit au moins un bouton de déclenchement et situé sur l'autre des zones latérales sensiblement selon une symétrie spéculaire par rapport audit au moins un bouton de déclenchement.

17. Dispositif électronique portatif selon la revendication 16, et comprenant en outre une lanière s'étendant le long, et à distance, de la zone de préhension et servant à confiner la main de l'utilisateur entre elle-même et ladite zone de préhension lorsque le dispositif est tenu par l'utilisateur.

18. Dispositif électronique portatif selon la revendication 17, dans lequel la lanière comporte une partie d'extrémité articulée sur un emplacement fixe de la partie inférieure de l'enceinte, et une autre partie d'extrémité ; et comprenant en outre un moyen pour monter ladite autre partie d'extrémité de la lanière sur la partie arrière de l'enceinte à une distance de la partie inférieure qui excède la largeur attendue de la main de tout utilisateur potentiel pour être mobile entre deux positions d'extrémité dans chacune desquelles la lanière s'étend sur l'arrière de la main que l'utilisateur utilise pour tenir le dispositif électronique par la zone de préhension de manière espacée par rapport à toutes les articulations de doigts et jointures de cette main.

19. Dispositif électronique portatif selon la revendication 18, dans lequel la lanière s'étend dans chacune de ses positions d'extrémité selon une direction qui diverge d'un angle aigu prédéterminé par rapport au plan de symétrie à partir de l'une vers ladite autre partie d'extrémité de la lanière.

20. Dispositif électronique portatif selon la revendication 1, dans lequel le boîtier a une configuration sensiblement en forme de dôme.

21. Dispositif électronique portatif selon la revendication 20, et comprenant en outre un moyen pour arrêter le boîtier dans des positions angulaires décalées les unes par rapport aux autres.

22. Dispositif électronique portatif selon la revendication 20, et comprenant en outre un moyen de balayage optique pour effectuer un balayage avec au moins un faisceau lumineux ou sur au moins un champ de vision, et comprenant un objectif dont au moins une partie est logée dans le boîtier ; dans lequel le boîtier en forme de dôme comprenant une fenêtre pour le passage du faisceau lumineux à travers celle-ci ; et comprenant en outre un moyen pour communiquer à une fréquence radio avec un lieu éloigné, comportant une antenne montée sur le boîtier vers l'arrière de la fenêtre pour un mouvement conjoint à celui du boîtier de manière à être toujours en dehors du champ de vue et du faisceau lumineux.

23. Dispositif électronique portatif selon la revendication 1, comprenant en outre un moyen pour augmenter l'adhérence entre au moins des parties choisies de la main de l'utilisateur et des parties correspondantes de la zone de préhension.

24. Dispositif électronique portatif selon la revendication 23, dans lequel le moyen d'augmentation d'adhérence comprend des protubérances dans lesdites parties correspondantes de la prise.

25. Dispositif électronique portatif selon la revendication 23, dans lequel la zone de préhension comporte deux surfaces latérales ; et dans lequel le moyen d'augmentation d'adhérence est situé dans la zone d'au moins une desdites surfaces latérales à laquelle le bout du pouce de l'utilisateur est juxtaposé lorsque le dispositif est en cours d'utilisation.

26. Dispositif électronique portatif selon la revendication 1, comprenant en outre une partie faisant saillie sur le côté arrière et délimitant un compartiment pouvant recevoir une batterie.

27. Dispositif électronique portatif selon la revendication 26, comprenant en outre des conformations de pieds sur ladite partie faisant saillie et le côté arrière pour porter le dispositif sur une surface de support généralement horizontale.

28. Dispositif électronique portatif selon la revendication 1, comprenant en outre une cavité dans une partie inférieure de l'enceinte, une pointe de lecture étant maintenue par frottement dans cette cavité dans une position rangée.

29. Dispositif électronique portatif selon la revendication 28, dans lequel la pointe de lecture comporte deux extrémités de marquage.

30. Dispositif selon la revendication 1, comprenant en outre un agencement pour monter un élément en forme de plaque comportant une surface avant et une surface arrière dans une ouverture de structure de support qui est délimitée par une surface périphérique interne, comprenant :
a) un moyen pour porter l'élément en forme de plaque dans l'ouverture, comprenant un châssis interne sensiblement rigide fermement en prise avec la surface périphérique interne et entourant de manière espacée l'élément en forme de plaque pour former un espace vide ; et
b) un surmoulage constitué d'un matériau élastiquement déformable comprenant une partie de pourtour qui s'étend autour du châssis interne et pénètre dans ledit espace pour le remplir et y former une barrière d'absorption de chocs.

31. Dispositif selon la revendication 30, dans lequel le moyen de support comprend en outre une plaque de renfort sensiblement rigide fermement en prise avec la surface périphérique interne adjacente au châssis interne et juxtaposée avec la surface arrière de l'élément en forme de plaque pour porter ce dernier de l'arrière.

32. Dispositif selon la revendication 30, comprenant en outre un châssis externe sensiblement rigide entourant le châssis interne avec un espacement prédéterminé entre eux ; et dans lequel le surmoulage comprend en outre une partie d'extension qui est une partie intégrante de la partie de pourtour et s'étend à partir de celle-ci autour du châssis externe.

33. Dispositif selon la revendication 32, dans lequel le surmoulage comprend en outre une partie supplémentaire étant une partie intégrante des parties de pourtour et d'extension et étant située entre celles-ci et pénétrant dans l'espacement entre les châssis interne et externe pour fournir une barrière supplémentaire d'absorption de choc entre eux.

34. Dispositif selon la revendication 33, dans lequel la partie supplémentaire du surmoulage pénètre dans l'espacement seulement dans une mesure limitée, étant délimitée par une surface délimitante ; et dans lequel le surmoulage comprend en outre un moyen pour délimiter dans cette partie supplémentaire un canal allongé qui s'ouvre sur la surface délimitante et forme une charnière vive dans ladite partie supplémentaire entre les parties d'enceinte et d'extension.

35. Dispositif selon la revendication 34, dans lequel le canal a sensiblement, en coupe, une forme de V.

36. Dispositif selon la revendication 1, comprenant en outre un assemblage multi-connecteurs Comportant :
a) une plaque ;
b) deux connecteurs multiples montés sur la plaque et s'étendant à travers celle-ci ;
c) un connecteur d'alimentation monté sur la plaque et s'étendant à travers celle-ci ;
d) un joint moulé de manière intégrante avec la plaque pour sceller la plaque à un dispositif.

37. Assemblage selon la revendication 36, dans lequel chaque connecteur comporte une protection électriquement connectée à la plaque.

38. Assemblage selon la revendication 36, dans lequel le joint est un joint d'étanchéité élastomère.

39. Assemblage selon la revendication 37, dans lequel chaque protection est une partie intégrante de la plaque.
